# EUROPEAN PATENT APPLICATION

(11) **EP 4 741 902 A1**
(43) Date of publication of application: **13.05.2026**
(21) Application number: 25213680.9
(22) Date of filing: 05.11.2025
(51) Int. Cl.: G02B 6/44, H02G 15/013

(54) **CABLE ATTACHMENT SYSTEM**

(30) Priority: 07.11.2024 US 202463717643 P
(71) Applicant: Corning Research & Development Corporation, Corning, New York 14831 (US)
(72) Inventor: KADI, Ilias, 44100 Nantes (FR); VAN DER VELDE, Martijn Nisse, 44260 SAVENAY (FR)
(74) Representative: Reddie & Grose LLP

(57) **Abstract**

There is provided a cable attachment system for sealing and retaining a communications cable is provided. The cable attachment system comprises a housing having a first end and a second end. The cable attachment system comprises a sealing member couplable to the second end of the housing. The sealing member comprises at least two cover elements. The sealing member further comprises an elastically deformable sealing material. The at least two cover elements are movable between a first position in which the cover elements are spaced away from each other, and a second position in which the cover elements and the elastically deformable sealing material form a seal between the sealing member and the communications cable. The cable attachment system further comprises a locking member configured to releasably engage with the cover elements to lock the cover elements in the second position.

## Description

### TECHNICAL FIELD

This application claims the benefit of priority of U.S. Application Serial No. 63/717,643 filed on November 7, 2024, the content of which is relied upon and incorporated herein by reference in its entirety.

### TECHNICAL FIELD

This disclosure relates to the field of cable attachment system for inserting a telecommunication cable containing optical fibers, copper wires or coax cable into a telecommunications enclosure, for example into a terminal closure, pre-stubbed terminal, optical network terminal or other junction box.

### BACKGROUND

Telecommunication cables are ubiquitous and used for distributing all manner of data across vast networks. The majority of cables are electrically conductive cables (typically copper), although the use of optical fiber cables is growing rapidly in telecommunication systems as larger and larger amounts of data are transmitted. Additionally, as data transmissions increase, the fiber optic network is being extended closer to the end user which can be a premise, business, or a private residence.

As telecommunication cables are routed across data networks, it is necessary to periodically open the cable so that one or more telecommunication lines therein may be spliced, thereby allowing data to be distributed to other cables or "branches" of the telecommunication network. At each point where a telecommunication cable is opened, it is necessary to provide a telecommunication enclosure to protect the exposed interior of the cable. The cable branches may be further distributed until the network reaches individual homes, businesses, offices, and so on. These networks are often referred to as fiber to the X (FTTX) networks which can include fiber to the premise (FTTP), fiber to the home (FTTH) and fiber to the antenna (FTTA) networks.

In an FTTH network, optical fiber is brought to the end user and connected to the optical network terminal (ONT) unit mounted on a wall at the end user. The ONT converts this optical signal into conventional electrical signals to provide voice (telephone), Internet (data) and video signals to the end user.

Blown Fiber is a technology used to deploy FTTH in many countries. Protective tubes or ducts are lain in the ground and the fiber-optic cables are then installed by being blown through the protective tube by a medium such as air or water.

Fiber terminals are one type of telecommunication enclosure that is typically located near an end user in a FTTP network to distribute the final service to the end user. Typical fiber terminals are designed to drop services (to provide service connections) to a small number of premises having typically between four to twelve end users. The last service connection from the fiber terminal is made to the ONT, located at the end user using a drop cable. Typically, an optical connector attached to the terminal end of an optical fiber of the cable is preferred to allow quick, reliable field installation.

A number of cable attachment systems are known in the art. It is generally known to provide cable attachment systems which fix and seal cables containing optical fibers, copper wires or coax cable into a telecommunications enclosure. However, existing solutions suffer from a number of drawbacks.

In particular, one drawback with existing cable attachment systems is that with the recent growth of fiber optic networks, operators installing the availability of trained operators has become problematic. Many operators today are less qualified and under pressure to work faster. This can lead to poor installation of cable attachment systems by operators due to a lack of adherence to proper procedures. This in turn leads to dissatisfied users of the network.

Another drawback of existing solutions is that these are required to be packaged with numerous plastic parts and grommets. This is to ensure that the cable attachment system can be adapted to be used with a wide range of cable diameters, ensuring watertightness and fixation of different cables. This results in a significant amount of unnecessary waste as most of the plastic parts and grommets remain unused. The production of these spare parts is also very costly for the manufacturer.

Therefore, it would be desirable to provide a cable attachment system which does not suffer from the above drawbacks. In particular, it would be desirable to provide a cable attachment system which are cheaper and has a reduced impact on the environment. Furthermore, it would be desirable to provide a cable attachment system which is easier and faster to install, meaning that operators require less training.

### SUMMARY

According to an aspect, a cable attachment system for sealing and retaining a communications cable is provided. The cable attachment system comprises a housing having a first end and a second end. The cable attachment system comprises a sealing member couplable to the second end of the housing. The sealing member comprises at least two cover elements. The sealing member further comprises an elastically deformable sealing material. The at least two cover elements are movable between a first position in which the cover elements are spaced away from each other, and a second position in which the cover elements and the elastically deformable sealing material form a seal between the sealing member and the communications cable. The cable attachment system further comprises a locking member configured to releasably engage with the cover elements to lock the cover elements in the second position.

Embodiments according to this aspect may provide an improved cable attachment system. The cable attachment system of this aspect may provide a solution which produces less waste through its entire lifecycle. In particular, the cable attachment system of this aspect may provide an improved sealing arrangement which allows the cable attachment system to be used with cables having different diameters without the need for different parts or grommets. In more detail, the sealing arrangement of this aspect allows the cable attachment system, and in particular the sealing member, to conform to the shape of the cable to form a seal. The provision of a cable attachment system with fewer parts is not only beneficial from an ecological point of view but is also cheaper to produce and easier to install. An operator is therefore less likely to incorrectly install the cable attachment system of this aspect. The cable attachment system of this aspect can also protect the cable inserted into the cable attachment system against the ingress of moisture and debris such as dust. In particular, where the cable is a fiber optic cable, the cable attachment system can protect the optical fibers housed within the cable from the ingress of moisture and debris as well as from any movement which could damage the fibers. When installed, the cable attachment system of this aspect may provide IP68 ingress protection. The provision of the locking member may ensure that the seal between the sealing member and the cable can be maintained.

Optionally, the at least two cover elements are hingedly coupled to the second end of the housing by means of a respective hinge for each cover element. This can prevent the at least two cover elements from inadvertently becoming detached from the cable attachment system during transport and/or installation. The installation of the cable attachment system may also be facilitated as there may be fewer floating parts to be attached to form the cable attachment system.

Optionally, the at least two cover elements are movable between the first and the second position about their respective hinges. The two cover elements being movable between the first position and the second position about their respective hinges can also help to form a tight seal around a cable inserted into the device. In particular, movement of the two cover elements from the first position to the second position about the hinges may compress the elastically deformable sealing material around the cable to form a tight seal.

Optionally, each cover element comprises a portion of elastically deformable sealing material configured to form a continuous seal around an inner perimeter of the sealing member when the cover elements are in the second position. Each portion of elastically deformable sealing material may be fixed to its respective cover element. This can help to further simplify the installation of the cable attachment system as the means of sealing the cable does not need to be installed separately.

Optionally, when the first cover member and the second cover member are in the second position, the seal defines a first opening at or proximate a first end of the sealing member and a second opening at or proximate a second end of the sealing member, the seal also defining a channel between the first opening and the second opening. The first opening may have a smaller area than the second opening. This may ensure a tight seal is created with the cable at the first end of the sealing member. Furthermore, the first opening having a smaller diameter than the second opening may provide space for the elastically deformable sealing material to deform and conform to the shape of the cable passing through the cable attachment system. In more detail, elastically deformable sealing material from the first end of the sealing member may deform towards the second end of the sealing member to form a substantially uniform seal around the cable.

Optionally, the first end of the sealing member is adjacent the second end of the housing when the two are coupled.

Optionally, the elastically deformable sealing material is a gel. Gels are readily available and generally cheap. Providing a gel as the sealing material may help to simplify the manufacturing of the cable attachment system and reduce costs. In particular, forming the elastically deformable sealing material in the required shape may be simplified by using a gel, which is an easily moldable material.

Optionally, the cable attachment system further comprises a clamping member configured to abut the locking member and engage with the housing to keep the locking member engaged with the housing. The clamping member may ensure that all components of the cable attachment system remain attached during use. The clamping member may ensure a tight connection between the housing, the sealing member and the locking member. In particular, the clamping member may maintain the engagement between the locking member and the sealing member to ensure that the seal between the sealing member and the cable can be maintained. Disengagement of the clamping member from the housing may release the locking member from the sealing member.

Optionally, the sealing member comprises a sealing member engaging mechanism for engaging with a corresponding locking member engaging mechanism. The sealing member engaging mechanism and the corresponding locking member engaging mechanism may facilitate secure and tight engagement between the sealing member and the locking member to prevent relative movement and ensure an adequate seal is maintained between the cable attachment system and the cable.

Optionally, the sealing member engaging mechanism comprises at least one engaging element on each cover element. This may help to ensure that both cover elements remain in the second position when the locking member is engaged with the cover elements.

Optionally, the locking member engaging mechanism comprises at least two engaging elements, each configured to engage with an engaging element of each cover element.

Optionally, the engaging element on each cover element is a slot, and the at least two engaging elements on the locking member are corresponding teeth. Slots and teeth are relatively simple engagement means. Therefore, an operator could easily understand how to engage the locking member with the sealing cover elements without the need for extensive training.

Optionally, the engaging element on each cover element is a tooth, and the at least one engaging element on the locking member are corresponding slots. Similarly to the above alternative in which the engaging element on each cover element is a slot, and the at least two engaging elements on the locking member are corresponding teeth, this can help with improving the ease of assembly of the cable attachment system.

Optionally, the locking member comprises at least one cable removal prevention mechanism to prevent removal of the cable from the locking member. The cable removal prevention mechanism may help to prevent inadvertent removal of the cable from the cable attachment system once it has been installed. This may help to ensure that the cable is suitably fixed within the cable attachment system to protect the optical fibers housed in the cable.

Optionally, the cable removal prevention mechanism comprises at least one resilient protrusion projecting inwardly in the locking member, the at least one resilient protrusion being configured to be deflected by a cable to allow movement of the communications cable through the locking member in a first direction. This may allow the cable to be inserted into the locking member in a desired direction. The at least one resilient protrusion being deflectable by the cable may allow the locking member to be used with cables having different diameters without the need for replacing the locking member.

Optionally, the at least one resilient protrusion engages with the communications cable to prevent movement of the cable in a second direction, opposing the first direction. This may help to prevent inadvertent removal of the cable from the cable attachment system once it has been installed. Where the cable is a fiber optic cable, this may help to ensure that the cable is suitably fixed within the cable attachment system to protect the optical fibers housed in the cable from any relative movement between the cable and the cable attachment system.

Optionally, the locking member comprises two or more resilient protrusions spaced around an outer perimeter of the locking member. The provision of two or more resilient protrusions may help to locate the cable within the locking member. In particular, the provision of two or more resilient protrusions may retain the cable centrally within the locking member.

Optionally, the clamping member threadedly engages with an outer surface of the housing. This may provide secure fixation of the clamping member with the housing. Furthermore, the threaded engagement may provide the user with a degree of modulation with regard to the tightness of the clamping of the clamping member with the housing.

Optionally, the cable attachment system is configured to retain and seal a fiber optic cable.

Optionally, the first end of the housing comprises a cable retention means configured to fix the cable relative to the housing. The cable retention means may prevent inadvertent removal of the cable from the cable attachment system and may prevent relative movement of the cable relative to the cable attachment system.

Optionally, the cable retention means is configured to engage with a reinforcing member of the fiber optic cable to fix the cable relative to the housing.

Optionally, the cable retention means is a clamp.

Optionally, the cable attachment system is configured to seal and retain a communications cable entering a telecommunications closure through an opening defined in the closure.

Optionally, the housing includes a securing zone adjacent to the first end of the housing to secure the housing in a port of a telecommunications closure. With this arrangement, when the housing and the closure are connected, the securing zone may be received in the closure. This may have the advantage of the securing zone being more secure and less likely to be unintentionally disengaged when other attachment devices are being connected or disconnected.

Optionally, the securing zone comprises one or more resilient members that releasably engage with the closure to couple the housing to the telecommunications closure. This can allow the attachment device to be releasably connected to the closure. This can make assembly and disassembly easier, as well as providing an operator with more options for routine maintenance operations.

Optionally, the system further comprises an outer seal configured to form a seal between the housing and the telecommunications closure. This arrangement can enable good sealing between the housing and the closure.

Optionally, the outer seal is configured to circumscribe an outer surface of the housing. Providing a seal that is configured to circumscribe an outer surface of the housing rather than being configured to be received in the opening of the closure can help to make routine maintenance operations easier for an operator. This is because the seal can be more easily replaced in case of failure.

Optionally, a first side of the outer seal abuts a protrusion on the outer surface of the of the housing.

Optionally, a surface of the clamping member abuts a second side of the outer seal to hold the outer seal in place. Such an arrangement simplifies the assembly of the cable attachment system in that there is no need for an operator installing the cable attachment system to accurately locate the outer seal. The seal is located by the assembly of the clamping member with the housing.

Optionally, the outer seal is an O-ring seal.

Additional features and advantages will be set forth in the detailed description which follows, and in part will be readily apparent to those skilled in the art from that description or recognized by practicing the invention as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The embodiments of the disclosure will be described with respect to the Figures, in which:
Figure 1 illustrates a perspective exploded view of a cable attachment system, according to an aspect;
Figure 2A illustrates a perspective view of a sealing member of a cable attachment system in the first position, according to an aspect;
Figure 2B illustrates a perspective view of a sealing member of a cable attachment system in the second position, according to an aspect;
Figure 3 illustrates a perspective view of cover element of a cable attachment system with a sealing gel installed, according to an aspect;
Figure 4A illustrates a perspective view of a locking member for a cable attachment system, according to an aspect;
Figure 4B illustrates a side sectional view of a locking member for a cable attachment system, according to an aspect;
Figure 5 illustrates a side view of a locking member engaged with a sealing member for a cable attachment system, according to an aspect;
Figure 6 illustrates a side sectional view of an assembled cable attachment system according to an aspect.

Like components across different figures are represented by like reference numerals.

### DETAILED DESCRIPTION OF EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

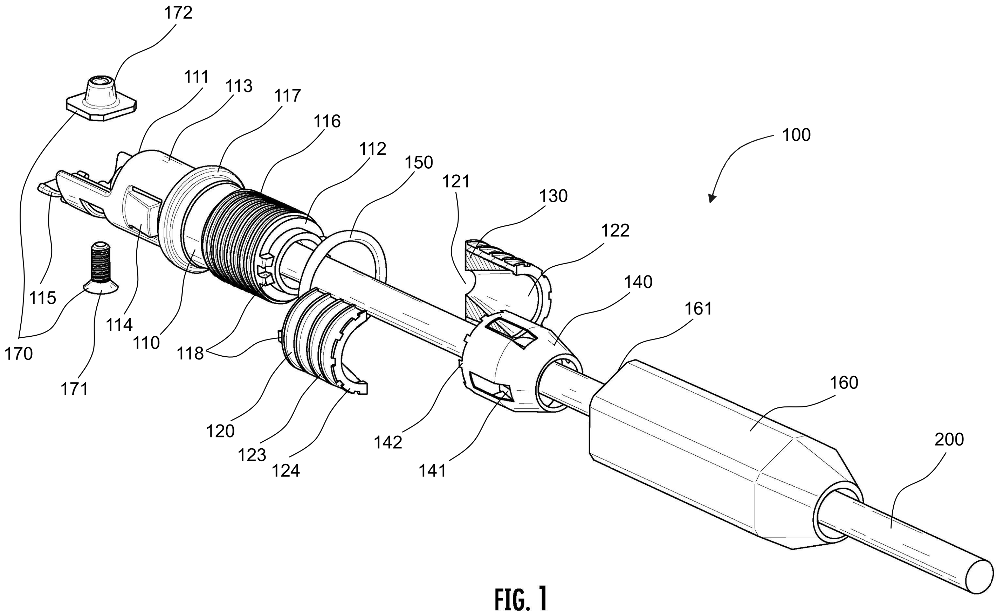

Figure 1 illustrates a perspective exploded view of a cable attachment system 100 with a cable 200. The cable attachment system 100 comprises a generally tubular housing 110 having a first end 111 and a second end 112. It will be appreciated that the housing 110 may have any suitable cross section. At the first end 111 of the housing, the housing comprises a securing zone 113 which is configured to be secured to a housing of a telecommunications closure. It will be appreciated that this is an illustrative example only and the securing zone 113 may be configured to be secured to a different device. The securing zone 113 comprises two resilient members 114, which in this example are clips, though it will be appreciated that this is exemplary only and that the securing zone 113 may comprise a different number of resilient members 114. For example, the securing zone may comprise only one resilient member 114, two, resilient members, three resilient members 114, four resilient members 114 or any number of resilient members 114 greater than a single resilient member 114. The clips are configured to engage with the telecommunications closure to secure the housing 110 in the telecommunications closure. It will also be appreciated that the one or more resilient members 114 of the securing zone 113 may be any suitable alternative to clips that can secure the housing 110 to a telecommunications closure, or other device.

The first end 111 of the housing 110 further comprises a cable retention mechanism 170 configured to engage with a reinforcing member of a fiber optic cable 200 to fix the cable 200 relative to the housing. In this example the cable retention mechanism 170 is a clamp comprising a nut 171 and a bolt 172 which are configured to clamp a central strength member or an aramid mesh of the fiber optic cable. It will be appreciated that the retention 170 mechanism may be any other suitable retention mechanism suitable for fixing the cable 200 relative to the housing 110. The housing also comprises an end portion 115. The end portion 115 forms a spool around which excess length of a strength member of the cable may be wrapped. This is particularly useful where the cable comprises an aramid mesh strength member. It will be appreciated that the illustrated end portion is exemplary only and alternative solutions for holding excess lengths of a cable strength member are also within the scope of this aspect.

The housing 110 further comprises a shoulder 117 configured to abut a first side of the outer seal 150. The shoulder 117 also helps to locate the outer seal when the cable attachment device 100 is fully assembled and engaged with a telecommunications closure. In alternative examples, the housing 110 may comprise a second shoulder to abut a second side of the outer seal 150. In this example embodiment, an end face 161 of the clamping member 160 acts as the second shoulder which abuts the second side of the outer seal 150. In this example, the outer seal 150 is an O-ring seal. It will be appreciated that alternative sealing means may be used which fulfil the same purpose of sealing between the housing and the telecommunications closure.

The housing further comprises a thread 116 on its outer surface to engage with a corresponding thread on the clamping member 160. It will be appreciated that alternative engaging mechanisms may be used to engage the housing 110 with the clamping member 160. For example, the engagement between the housing 110 and the clamping element 160 may be provided by one or more clips, or a friction or interference fit.

A generally tubular sealing member 120 is configured to be hingedly coupled to the housing 110 at a second end 112 of the housing 110 at hinges 118. It will be appreciated that the sealing member 120 may have any appropriate cross section. The sealing member 120 comprises two cover elements 123 which are each couplable to the housing 110 at respective hinges 118. The hinge portions at the second end 112 of the housing 110 are equally spaced around the circumference of the housing 110. However, in alternative embodiments, the hinge portions at the second end of the housing 110 may be spaced unequally around the circumference of the housing 110. In this aspect, the sealing member 120 comprises two cover elements 123, each of which are generally half cylinders in shape. It will be appreciated that this aspect is exemplary only and that sealing member 120 may comprise a different number of cover elements 123. For example, the sealing member 120 may comprise three cover elements 123, four cover elements 123 or any number of cover elements 123 greater than two cover elements 123. Each of the two cover elements 123 comprises a portion of elastically deformable sealing material 130 formed inside each cover element 123. It will be appreciated that the elastically deformable sealing material 130 may be provided as a separate component to the sealing member. In particular, the elastically deformable sealing material may be a standalone seal. In such examples, the elastically deformable sealing material 130 may be inserted into the sealing member 120 during assembly of the cable attachment system 100. In this example the elastically deformable 130 sealing material is a gel, but this is illustrative only and alternative materials may be used.

The cover elements 123 comprise an engaging mechanism in the form of splines 124. As illustrated, the splines 124 are spaced equally around the circumference of the sealing member 120. The splines 124 are all of the same dimensions. It will be appreciated that each cover element 123 may comprise a different number of splines to what is illustrated in Figure 1. In particular, each cover element 123 may comprise only one spline 124, two splines 124, three splines 124 or any number of splines 124 greater than a single spline 124. Equally, the splines 124 of the sealing member 120 may each have different dimensions. In embodiments in which the splines 124 of the sealing member have different dimensions, assembly of the locking member 140, described in more detail below, may be enabled in only one, or more specific orientations. It will be appreciated that the engaging mechanism of the cover elements may take an alternative shape such as teeth or clips.

The cable attachment system 100 further comprises a locking member 140 configured to releasably engage with the cover elements 123. As illustrated, the locking member 140 is generally tubular with a taper on one side, however, it will be appreciated that the locking member 140 may have any suitable shape. The locking member 140 comprises a cable removal prevention mechanism in the form of resilient protrusions 141. It will be appreciated that the cable removal prevention mechanism may take any suitable shape.

In use the resilient protrusions 141 deflect in a first direction when a cable 200 is inserted through the locking member. The resilient protrusions engage with the cable 200 to prevent removal of the cable 200. The resilient protrusions 141 are in the form of legs which extend inwardly from the locking member 140. The resilient protrusions 141 have a first end attached to the locking member 140 and a second end spaced away from the locking member 140. In other examples the resilient protrusions 141 may be attached to the locking member 140 at both ends.

In some respects, the resilient protrusions 141 may be configured with a specific geometry and material properties to enable their functionality as a cable removal prevention mechanism. The protrusions 141 may have an angled or curved profile that allows them to easily deflect in one direction when a cable is inserted, while resisting deflection in the opposite direction.

The resilient protrusions 141 may be formed from a flexible yet durable material, such as a thermoplastic elastomer or spring steel. This material choice may allow the protrusions to repeatedly flex without losing their shape or functionality over time.

In some cases, the free end of each protrusion 141 may be shaped with a tapered or rounded edge on the side facing the cable insertion direction. This shape may facilitate smooth passage of the cable during insertion by allowing the protrusion 141 to easily bend out of the way. The opposite side of the free end may have a more abrupt or squared edge to increase friction against the cable surface when force is applied in the removal direction.

The angle at which the protrusions 141 extend from the locking member 140 may also contribute to their directional behavior. For example, the protrusions 141 may be angled slightly towards the cable insertion direction, allowing them to more easily fold flat against the inner wall of the locking member during cable insertion.

In some implementations, the resilient protrusions 141 may be arranged in multiple rows or in a staggered pattern around the inner circumference of the locking member 140. This arrangement may provide more consistent engagement with the cable surface and distribute the retention force more evenly.

The length, thickness, and spacing of the protrusions 141 may be optimized based on the expected cable diameters and required retention force. Longer protrusions may provide more flexibility and a larger deflection range, while shorter, stiffer protrusions may offer stronger resistance to cable removal.

In some aspects, the base of each protrusion 141 where it attaches to the locking member 140 may be reinforced or thickened to prevent breakage under repeated stress. This reinforcement may transition to a thinner, more flexible section along the length of the protrusion.

The locking member 140 may include internal stops or limiting features that prevent over-deflection of the protrusions 141, ensuring they return to their original position after cable insertion and maintain their ability to engage the cable surface.

The locking member 140 comprises an engaging mechanism configured to engage with the engaging mechanism of the cover elements. The engaging mechanism of the locking member 140 may be in the form of teeth 142. As illustrated, the teeth 142 are spaced equally around the circumference of the locking member 140. The teeth 142 are all of the same dimensions. It will be appreciated that locking member 140 may comprise a different number of teeth 142 to what is illustrated in Figure 1. In particular, the locking member 140 may comprise only two teeth 142, each corresponding to a cover element 123, three teeth 142 or any number of teeth 142. Equally, the teeth 142 of the locking member 140 may each have different dimensions. This may only enable assembly of the locking member 140 with the sealing member 120 in one or certain specific orientations.

The cable attachment system further comprises a clamping member 160. The clamping member 160 is generally cylindrical with a taper on one side. The clamping member 160 comprises an end face 161. The clamping member 160 is configured to receive the locking member 140, the sealing member 120 and a portion of the housing 110. The clamping member 160 is configured to engage with the thread 116 of the housing 110 to secure the locking member 140, the sealing member 120 and the housing 110 together. The clamping member 160 has squared edges. This facilitates assembly of the cable attachment system 100 and secure fastening of the clamping member 160 with the housing 110 as it provides a user with a better grip on the clamping member 160. It will be appreciated that the squared edges are optional. In this example, the taper at one end of the clamping member 160 engages with the taper of the locking member 140 to urge the locking member 140 into engagement with the sealing member 120 and maintain engagement of the two.

The clamping member 160 keeps the locking member 140 engaged with the housing 110 through a combination of mechanical features and interactions. The clamping member 160 is configured to receive the locking member 140, the sealing member 120, and a portion of the housing 110. It engages with the thread 116 on the outer surface of the housing 110, which allows it to be securely fastened to the housing. As the clamping member 160 is tightened onto the housing 110 via the threaded engagement, it applies pressure to the components within it. The taper at one end of the clamping member 160 is designed to engage with a corresponding taper on the locking member 140. This tapered interface creates a wedging effect that urges the locking member 140 into engagement with the sealing member 120. By maintaining this pressure, the clamping member 160 ensures that the locking member 140 remains firmly engaged with the sealing member 120, which in turn is coupled to the housing 110. This arrangement creates a secure assembly where all components are held tightly together, preventing unintended disengagement or movement of the locking member 140 relative to the housing 110.

It will be appreciated that in some examples, a single component may carry out the function of the locking member 140 and the clamping member 160.

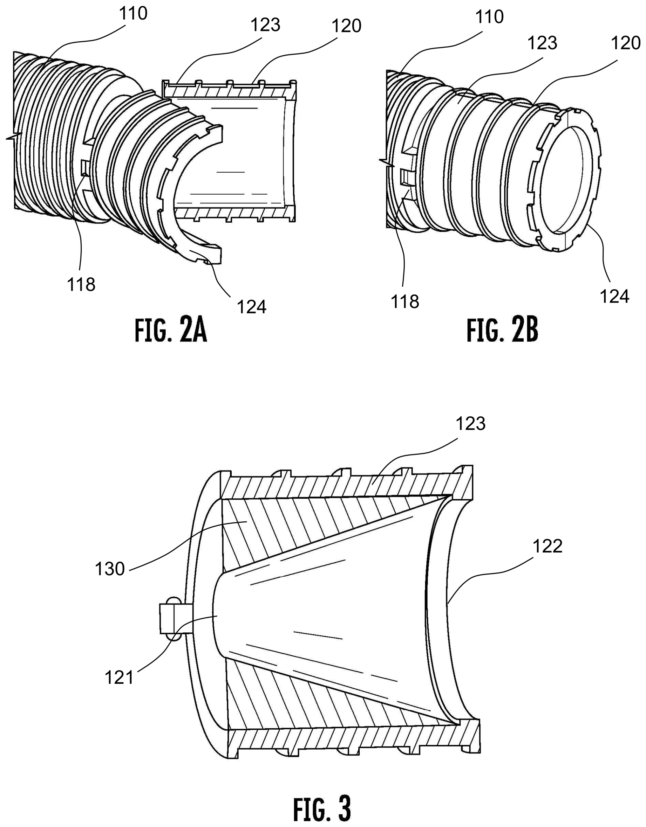

Figure 2A illustrates a perspective view of a sealing member 120 of a cable attachment system 100 in the first position. The sealing member 120 is hingedly coupled with the housing 100 by way of hinges 118. In this first position the, the cover elements 123 extend at an angle relative to the central axis of the housing 110. The elastically deformable sealing material 130 is not shown in this Figure.

Figure 2B illustrates a perspective view of a sealing member 120 of a cable attachment system 100 in the second position. In this second position, the cover elements 123 define a generally tubular sealing member 120. When the cover elements123 are in this second position and a cable is inserted, the cover elements exert pressure on the elastically deformable sealing material 130 such that is compressed and deforms around the cable to form a seal between the sealing member 120 and the cable.

Figure 3 illustrates a perspective view of a cover element of a cable attachment system with a sealing gel installed. As illustrated the elastically deformable sealing material 130 defines a first opening 121 at a first end of the sealing member 120 and a second opening 122 at a second end of the sealing member 120. A channel runs between the first opening 121 and the second opening 122. The first opening 121 has a smaller area than the second opening 122 such that the elastically deformable sealing material 130 forms a generally conical channel. In use, the first opening 121 has an area which is smaller than the cross-sectional area of the cable 200 and the second opening 122 has an area which is greater than the cross-sectional area of the cable 200. When the cover elements are in the second position around a cable, the elastically deformable sealing material may deform such that sealing material proximate the first opening 121 is urged towards the second opening 122.

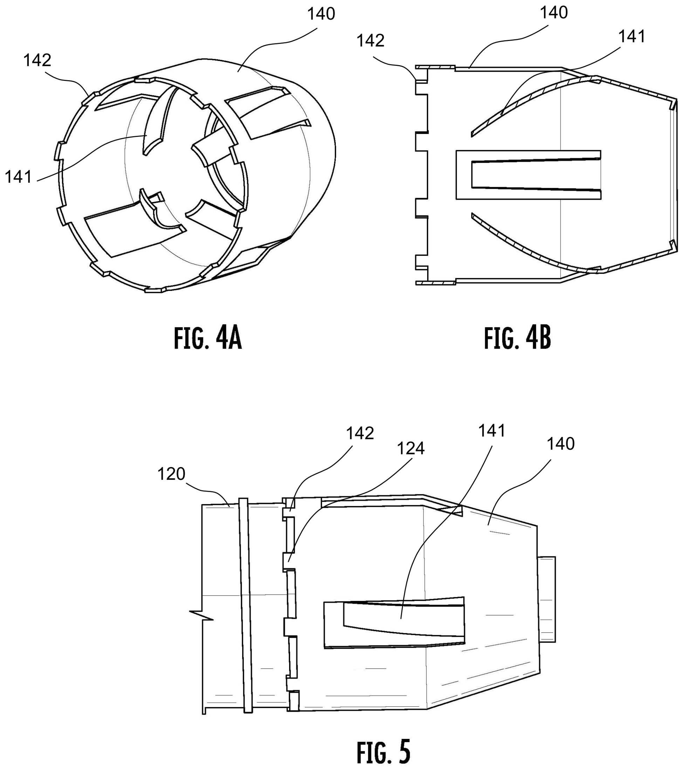

Figure 4A illustrates a perspective view of a locking member 140 for a cable attachment system 100. As already described in relation to Figure 1, the locking member 140 is generally tubular with a taper on one side. The locking member 140 comprises a cable removal prevention mechanism in the form of resilient protrusions 141. In use the resilient protrusions 141 deflect in a first direction when a cable 200 is inserted through the locking member. The resilient protrusions engage with the cable 200 to prevent removal of the cable 200. The resilient protrusions 141 are in the form of legs which extend inwardly from the locking member 140. The resilient protrusions 141 have a first end attached to the locking member 140 and a second end spaced away from the locking member 140. As illustrated the locking member 140 comprises four resilient protrusions 141. It will be appreciated that this is illustrative only, and the locking member 140 may comprise a different number of resilient protrusions 141. For example, the locking member may comprise only one resilient protrusion 141, three resilient protrusions 141, four resilient protrusions 141 or any number of resilient protrusions 141 greater than a single resilient protrusion 141.

The engaging mechanism of the locking member 140 in the form of teeth 142 are described in detail in respect of Figure 1.

Figure 4B illustrates a side sectional view of a locking member 140 for a cable attachment system 100. This Figure illustrates the shape of the resilient protrusions 141 in this example which engage with the cable. The resilient protrusions 141 extend towards the center of the locking member. The second end of each resilient protrusion 141 which is spaced away from the locking member are pointed to engage with the cable to prevent removal of the cable from the locking member.

Figure 5 illustrates a side view of a locking member 140 engaged with a sealing member 120 for a cable attachment system 100. This Figure shows how the teeth 142 of the locking member interlock with the splines 124 of the sealing member to hold the cover elements 123 in the second position.

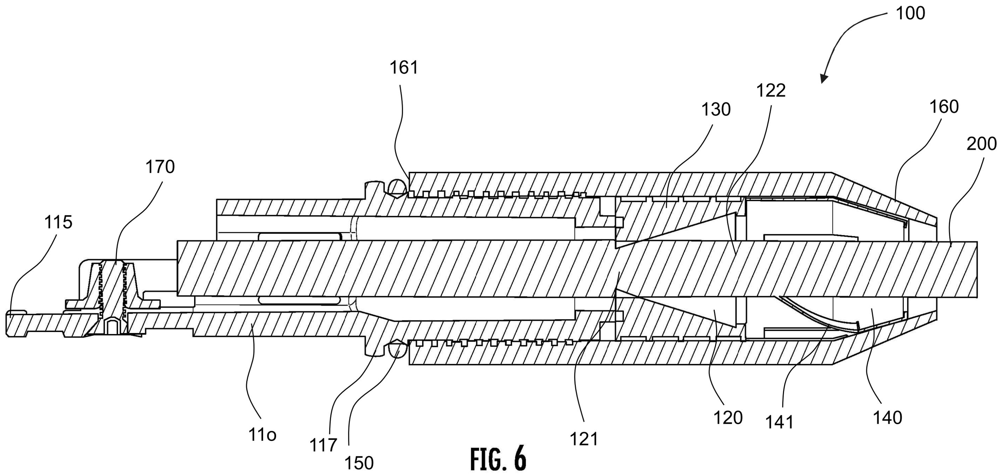

Figure 6 illustrates a side sectional view of an assembled cable attachment system 100. For brevity, features of Figure 6 already described in respect of Figures 1 to 5 will not be repeated.

Figure 6 illustrates the engagement between the resilient protrusions 141 and the cable. The sealing of the cable 200 by the elastically deformable sealing material 130 is also shown schematically. Figure 6 shows how the diameter of the cable is greater than the diameter of the first opening 121, and smaller than the diameter of the second opening 122.

Figure 6 also shows how the shoulder 117 of the housing abuts a first side of the outer seal 150. An end face 161 of the clamping member 160 acts as the second shoulder which abuts the second side of the outer seal 150.

As used herein, the terms "fiber optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated.

It is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Aspects of the invention are set out in the following numbered clauses:
Clause 1. A cable attachment system for sealing and retaining a communications cable, the system comprising:
   a housing having a first end and a second end,
   a sealing member couplable to the second end of the housing, the sealing member comprising at least two cover elements and an elastically deformable sealing material, the at least two cover elements being movable between a first position in which the cover elements are spaced away from each other, and a second position in which the cover elements and the elastically deformable sealing material form a seal between the sealing member and the communications cable;
   a locking member configured to releasably engage with the cover elements to lock the cover elements in the second position.
Clause 2. A cable attachment system according to clause 1, wherein the at least two cover elements are hingedly coupled to the second end of the housing by means of a respective hinge for each cover element.
Clause 3. A cable attachment system according to clause 2, wherein the at least two cover elements are movable between the first and the second position about their respective hinges.
Clause 4. A cable attachment system according to any preceding clause, wherein each cover element comprises a portion of elastically deformable sealing material configured to form a continuous seal around an inner perimeter of the sealing member when the cover elements are in the second position.
Clause 5. A cable attachment system according to clause 4, when the first cover member and the second cover member are in the second position, the seal defines a first opening at or proximate a first end of the sealing member and a second opening at or proximate a second end of the sealing member, the seal also defining a channel between the first opening and the second opening; and
   wherein the first opening has a smaller area than the second opening.
Clause 6. A cable attachment system according to clause 5, wherein the first end of the sealing member is adjacent the second end of the housing when the two are coupled.
Clause 7. A cable attachment system according to any one of the preceding clauses, wherein the elastically deformable sealing material is a gel.
Clause 8. A cable attachment system according to any preceding clause, wherein the cable attachment system further comprises a clamping member configured to abut the locking member and engage with the housing to keep the locking member engaged with the housing.
Clause 9. A cable attachment system according to any preceding clause, wherein the sealing member comprises a sealing member engaging mechanism for engaging with a corresponding locking member engaging mechanism.
Clause 10. A cable attachment system according to clause 9, wherein the sealing member engaging mechanism comprises at least one engaging element on each cover element.
Clause 11. A cable attachment system according to clause 10, wherein the locking member engaging mechanism comprises at least two engaging elements, each configured to engage with an engaging element of each cover element.
Clause 12. A cable attachment system according to clause 11, wherein the engaging element on each cover element comprises a slot, and the at least two engaging elements on the locking member comprise corresponding teeth.
Clause 13. A cable attachment system according to clause 11, wherein the engaging element on each cover element is a tooth, and the at least one engaging element on the locking member are corresponding slots.
Clause 14. A cable attachment system according to any preceding clause, wherein the locking member comprises at least one cable removal prevention mechanism to prevent removal of the cable from the locking member.
Clause 15. A cable attachment system according to clause 14, wherein the cable removal prevention mechanism comprises at least one resilient protrusion projecting inwardly in the locking member, the at least one resilient protrusion being configured to be deflected by a cable to allow movement of the communications cable through the locking member in a first direction.
Clause 16. A cable attachment system according to clause 15, wherein the at least one resilient protrusion engages with the communications cable to prevent movement of the cable in a second direction, opposing the first direction.
Clause 17. A cable attachment system according to clause 15 or 16, wherein the locking member comprises two or more resilient protrusions spaced around an outer perimeter of the locking member.
Clause 18. A cable attachment system according to any preceding clause, wherein the clamping member threadedly engages with an outer surface of the housing.
Clause 19. A cable attachment system according to any preceding clause, wherein the cable attachment system is configured to retain and seal a fiber optic cable.
Clause 20. A cable attachment system according to any preceding clause, wherein the first end of the housing comprises a cable retention mechanism configured to fix the cable relative to the housing.
Clause 21. A cable attachment system according to any preceding clause, wherein the cable retention mechanism is configured to engage with a reinforcing member of the fiber optic cable to fix the cable relative to the housing.
Clause 22. A cable attachment system according to any preceding clause, wherein the cable retention mechanism is a clamp.
Clause 23. A cable attachment system according to any preceding clause, wherein the cable attachment system is configured to seal and retain a communications cable entering a telecommunications closure through an opening defined in the closure.
Clause 24. A cable attachment system according to clause 23, wherein the housing includes a securing zone adjacent to the first end of the housing to secure the housing in a port of a telecommunications closure.
Clause 25. A cable attachment system according to clause 24, wherein the securing zone comprises one or more resilient members that releasably engage with the closure to couple the housing to the telecommunications closure.
Clause 26. A cable attachment system according to clause 23, wherein the system further comprises an outer seal configured to form a seal between the housing and the telecommunications closure.
Clause 27. A cable attachment system according to clause 26, wherein the outer seal is configured to circumscribe an outer surface of the housing.
Clause 28. A cable attachment system according to clause 27, wherein a first side of the outer seal abuts a protrusion on the outer surface of the of the housing.
Clause 29. A cable attachment system according to clause 28, wherein a surface of the clamping member abuts a second side of the outer seal to hold the outer seal in place.
Clause 30. A cable attachment system according to clause 26, wherein the outer seal is an O-ring seal.

## Claims

1. A cable attachment system for sealing and retaining a communications cable, the system comprising:
a housing having a first end and a second end,
a sealing member couplable to the second end of the housing, the sealing member comprising at least two cover elements and an elastically deformable sealing material, the at least two cover elements being movable between a first position in which the cover elements are spaced away from each other, and a second position in which the cover elements and the elastically deformable sealing material form a seal between the sealing member and the communications cable;
a locking member configured to releasably engage with the cover elements to lock the cover elements in the second position.

2. A cable attachment system according to claim 1, wherein the at least two cover elements are hingedly coupled to the second end of the housing by means of a respective hinge for each cover element.

3. A cable attachment system according to claim 2, wherein the at least two cover elements are movable between the first and the second position about their respective hinges.

4. A cable attachment system according to any one of claims 1-3, wherein each cover element comprises a portion of elastically deformable sealing material configured to form a continuous seal around an inner perimeter of the sealing member when the cover elements are in the second position.

5. A cable attachment system according to claim 4, wherein when the first cover member and the second cover member are in the second position the seal defines a first opening at or proximate a first end of the sealing member and a second opening at or proximate a second end of the sealing member, the seal also defining a channel between the first opening and the second opening; and
wherein the first opening has a smaller area than the second opening.

6. A cable attachment system according to claim 5, wherein the first end of the sealing member is adjacent the second end of the housing when the sealing member and the housing are coupled.

7. A cable attachment system according to any one of claims 1-6, wherein the elastically deformable sealing material is a gel.

8. A cable attachment system according to any one of claims 1-7, wherein the cable attachment system further comprises a clamping member configured to abut the locking member and engage with the housing to keep the locking member engaged with the housing.

9. A cable attachment system according to any one of claims 1-8, wherein the sealing member comprises a sealing member engaging mechanism for engaging with a corresponding locking member engaging mechanism.

10. A cable attachment system according to claim 9, wherein the sealing member engaging mechanism comprises at least one engaging element on each cover element.

11. A cable attachment system according to claim 10, wherein the locking member engaging mechanism comprises at least two engaging elements, each configured to engage with an engaging element of each cover element.

12. A cable attachment system according to claim 11, wherein the engaging element on each cover element comprises a slot, and the at least two engaging elements on the locking member comprise corresponding teeth.

13. A cable attachment system according to claim 11, wherein the engaging element on each cover element is a tooth, and the at least one engaging element on the locking member are corresponding slots.

14. A cable attachment system according to any one of claims 1-13, wherein the locking member comprises at least one cable removal prevention mechanism to prevent removal of the cable from the locking member.

15. A cable attachment system according to claim 14, wherein the cable removal prevention mechanism comprises at least one resilient protrusion projecting inwardly in the locking member, the at least one resilient protrusion being configured to be deflected by a cable to allow movement of the communications cable through the locking member in a first direction.
